# EUROPEAN PATENT APPLICATION

(11) **EP 4 116 029 A1**
(43) Date of publication of application: **11.01.2023**
(21) Application number: 22173713.3
(22) Date of filing: 17.05.2022
(51) Int. Cl.: B23K 26/03, B23K 26/035, B23K 26/04, B23K 26/362, B23K 26/70, B23K 37/00

(54) **LASER AUTOMATIC FOCUSING EQUIPMENT FOR LASER ENGRAVING MACHINE**

(30) Priority: 09.07.2021 CN 202121553930 U
(71) Applicant: Xu, Zengqiang, Lufeng City, Shanwei City, Guangdong 516600 (CN)
(72) Inventor: Xu, Zengqiang, Lufeng City, Shanwei City, Guangdong 516600 (CN)
(74) Representative: Petraz, Gilberto Luigi

(57) **Abstract**

The present application relates to a laser automatic focusing equipment for a laser engraving machine. It includes a lifting mechanism (1), a laser assembly (2) disposed at a lower end of a side of the lifting mechanism (1), and a lifting motor (3) fixedly disposed on an upper end of the side of the lifting mechanism (1) and is in transmission connection with the lifting mechanism (1). The laser assembly (2) includes a heat sink, a laser disposed in the heat sink, a distance sensor disposed in the heat sink and on a side of the laser, and a contact device (24) disposed in the heat sink and at a bottom of the laser. The whole focusing process is controlled by a program without human intervention, with high accuracy, no manual operation and no laser irradiation risk. It is suitable for focusing of engraving materials with different hardness and different materials by adding the contact device.

## Description

### TECHNICAL FIELD

The present disclosure relates to the field of motor performance testing technologies, and more particularly to a laser automatic focusing equipment for a laser engraving machine.

### BACKGROUND

During the use of a laser engraving machine, due to different thickness of engraved materials, a laser focus cannot be accurately focused on a surface of the engraved material every time, thereby affecting the engraving effect. For this focusing problem, a common solution is to manually focus before engraving, that is, to manually adjust a height of a laser system or the laser focus, so as to make the laser focus be focused on the surface of the engraving material, and then engraving.

At present, the common solution of manually adjusting the focus on the market is cumbersome in use, and the accuracy of manual adjustment cannot be guaranteed. In addition, the laser reflection may be dazzling during operation, which has a certain risk.

### SUMMARY

A purpose of the disclosure is to provide a laser automatic focusing equipment for a laser engraving machine, so as to solve the problems in the related art.

In order to achieve the above purpose, the disclosure provides technical solutions as follows.

Specifically, the disclosure relates to a laser automatic focusing equipment for a laser engraving machine, and the laser automatic focusing equipment may include a lifting mechanism, a laser assembly and a lifting motor. The lifting motor is fixedly disposed on an upper end of a side of the lifting mechanism, the lifting motor is in transmission connection with the lifting mechanism, and the laser assembly is disposed at a lower end of the side of the lifting mechanism. The laser assembly may include a heat sink, a laser, a distance sensor and a contact device. The laser is disposed inside the heat sink, the contact device is disposed in the heat sink and at a bottom end of the laser, and the distance sensor is disposed in the heat sink and on a side of the laser.

In an embodiment, the lifting mechanism may include an upper fixing plate, a side plate, a lower fixing plate and a lifting seat. The side plate is fixedly disposed at a bottom end of the upper fixing plate, and the lower fixing plate is fixedly disposed at a bottom end of the side plate. A screw rod is movably disposed between the upper fixing plate and the lower fixing plate through a bearing, the lifting seat is sleeved on an outer side of the screw rod, and the bottom end of the upper fixing plate is fixedly disposed with limit rods on two sides of the screw rod respectively, and a bottom end of each of the limit rods passes through the lifting seat and is fixedly connected to the lower fixing plate.

In an embodiment, a top end of the screw rod passing through the upper fixing plate is fixedly disposed with a first synchronous pulley located on a top of the upper fixing plate, an output end of the lifting motor passing through the upper fixing plate is fixedly disposed with a second synchronous pulley located on the top of the upper fixing plate, and the first synchronous pulley and the second synchronous pulley are in transmission connection through a belt.

In an embodiment, a side of the lifting seat is fixedly disposed with a fixing back plate.

In an embodiment, a bottom end of the contact device is disposed with a screw hole.

In an embodiment, a surface of the heat sink is disposed with multiple heat-dissipation grooves.

Compared with the prior art, the disclosure may include at least the beneficial effects as follows.

1. According to the laser automatic focusing equipment for the laser engraving machine, when focusing is needed, the lifting mechanism descends, and the contact device is contacted with the engraving material. At this situation, the contact device does not descend any more, the laser assembly continues to descend until the contact device is detected by the distance sensor. At this moment, a reference height of the laser assembly can be determined, and then the lifting mechanism ascends again. While the contact device returns out of a detection range of the distance sensor again due to gravity or the thrust of a spring, the ascending distance of the lifting mechanism is determined according to a preset laser focal length of the system. By performing the above steps, the laser focus can be accurately located on the surface of the material, the whole focusing process is controlled by a program without human intervention, the accuracy is high, manual operation is not needed, and laser irradiation risk is avoided.

2. According to the laser automatic focusing equipment for the laser engraving machine, the contact device is additionally disposed at the bottom end of the laser, so that the laser automatic focusing equipment can be suitable for focusing during engraving of engraving materials with different hardness and different materials.

### BRIEF DESCRIPTION OF DRAWINGS

FIG. 1 is a schematic overall structural diagram of a laser automatic focusing equipment of the disclosure.
FIG. 2 is a schematic structural installation diagram of a lifting mechanism of the disclosure.
FIG. 3 is a schematic structural installation diagram of a laser assembly of the disclosure.

Description of reference numerals: 1. lifting mechanism; 11. upper fixing plate; 12. side plate; 13. lower fixing plate; 14. lifting seat; 2. laser assembly; 21. heat sink; 22. laser; 23. distance sensor; 24. contact device; 3. lifting motor; 4. screw rod; 5. limit rod; 6. first synchronous pulley; 7. second synchronous pulley; and 8. fixing back plate.

### DETAILED DESCRIPTION OF EMBODIMENTS

Technical solutions in embodiments of the disclosure will be clearly and completely described in the following with reference to the drawings in the embodiments of the disclosure. Obviously, the described embodiments are only some of the embodiments, not all of the embodiments. Based on the embodiments of the disclosure, all other embodiments obtained by those skilled in the related art without creative work belong to the scope of protection of the disclosure.

In the description of the disclosure, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise" and the like indicate orientation or positional relationships based on the orientation or positional relationships shown in the drawings. It is only for the convenience of describing the disclosure and simplifying the description, and does not indicate or imply that the device or element referred to must have a specific orientation, be constructed and operate in a specific orientation, thus it should not be understood as a limitation to the disclosure.

In the description of the disclosure, it should be noted that unless otherwise specified and limited, the terms "installation", "connected", "connection" and "setting" should be understood in a broad sense. For example, they can be fixed connection and setting, removable connection and setting, or integrated connection and setting. For those skilled in the related art, the specific meaning of the above terms in the disclosure can be understood according to the specific circumstances.

In addition, the terms "first" and "second" are only used for descriptive purposes and are not to be construed as indicating or implying relative importance or as implying the number of technical features indicated. Thus, the features defined as "first" or "second" may be explicitly or implicitly defined as including one or more of the features. In the description of the disclosure, "several" means two or more, unless otherwise specified.

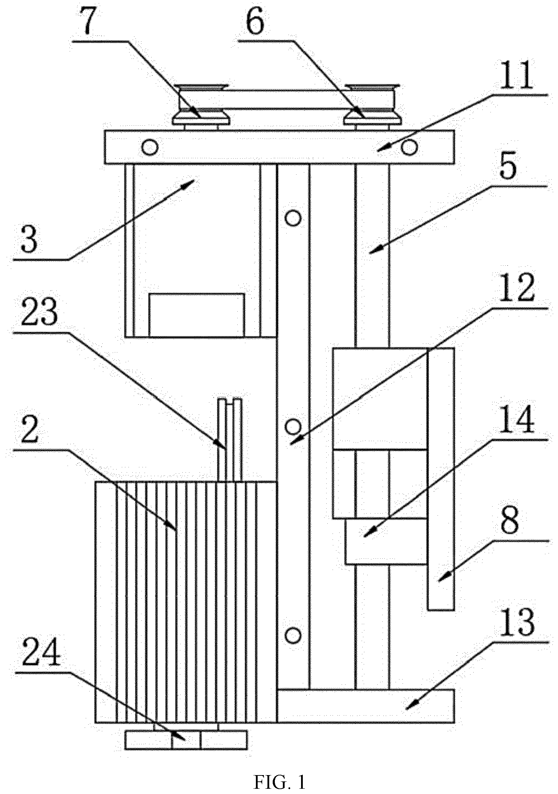

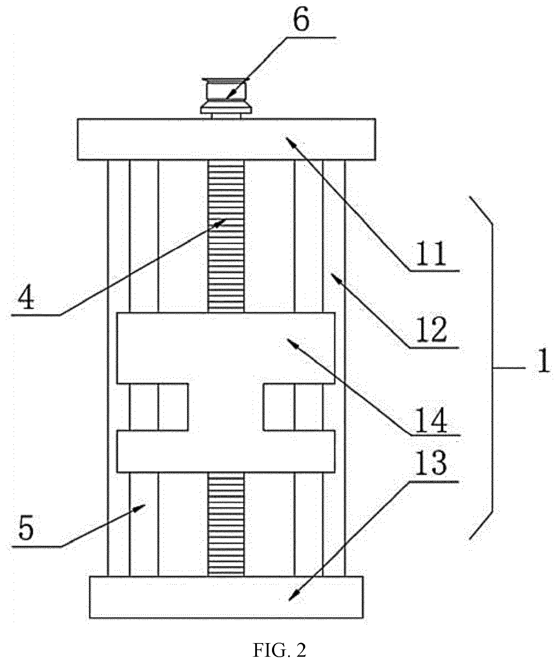

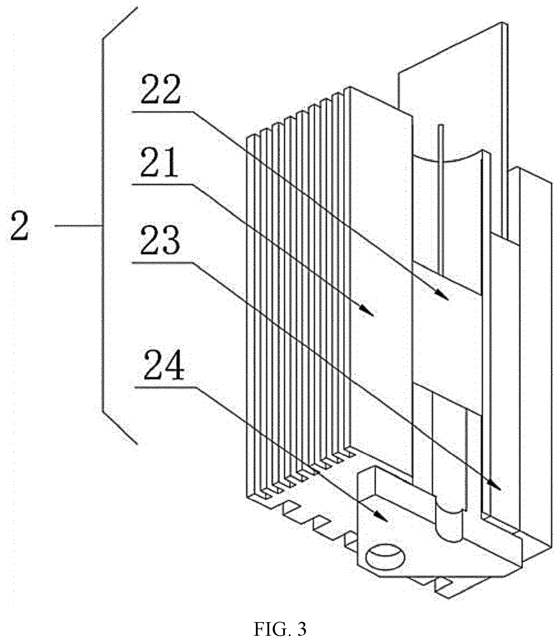

Referring to FIG. 1 through FIG. 3. The disclosure provides a technical solution as follows.

Specifically, the disclosure relates to a laser automatic focusing equipment for a laser engraving machine, and the laser automatic focusing equipment may include a lifting mechanism 1, a laser assembly 2 and a lifting motor 3. The lifting motor 3 is fixedly disposed on an upper end of a side of the lifting mechanism 1, the lifting motor 3 is in transmission connection with the lifting mechanism 1, and the laser assembly 2 is disposed at a lower end of the side of the lifting mechanism 1. The laser assembly 2 may include a heat sink 21, a laser 22, a distance sensor 23 and a contact device 24. The laser 22 is disposed in the heat sink 21. The contact device 24 is disposed in the heat sink 21 and at a bottom end of the laser 22. The distance sensor 23 is disposed in the heat sink 21 and on a side of the laser 22.

In an illustrated embodiment, the lifting mechanism 1 may include an upper fixing plate 11, a side plate 12, a lower fixing plate 13 and a lifting seat 14. The side plate 12 is fixedly disposed at a bottom end of the upper fixing plate 11, and the lower fixing plate 13 is fixedly disposed at a bottom end of the side plate 12. A screw rod 4 is movably arranged between the upper fixing plate 11 and the lower fixing plate 13 through a bearing, the lifting seat 14 is sleeved on an outer side of the screw rod 4, and the bottom end of the upper fixing plate 11 is fixedly disposed with limit rods 5 on two sides of the screw rod 4 respectively. A bottom end of each of the limit rods 5 pass through the lifting seat 14 and is fixedly connected to the lower fixing plate 13.

In an illustrated embodiment, a top end of the screw rod 4 passing through the upper fixing plate 11 is fixedly disposed with a first synchronous pulley 6 located on a top of the upper fixing plate 11, an output end of the lifting motor 3 passing through the upper fixing plate 11 is fixedly disposed with a second synchronous pulley 7 located the top of the upper fixing plate 11, and the first synchronous pulley 6 and the second synchronous pulley 7 are in transmission connection through a belt.

In an illustrated embodiment, a side of the lifting seat 14 is fixedly disposed with a fixing back plate 8 to facilitate a fixing of the laser automatic focusing equipment.

In an illustrated embodiment, a bottom end of the contact device 24 is formed with a screw hole, and the screw hole of the contact device 24 is equipped with a screw for limiting, so that the contact device 24 can move up and down within a limited range without falling off.

In an illustrated embodiment, a surface of the heat sink 21 is formed with multiple heat-dissipation grooves, which can increase the heat-dissipation area.

When the automatic laser focusing equipment for the laser engraving machine of the illustrated embodiment is in use, the lifting motor 3 and the laser assembly 2 are installed on the lifting mechanism 1, the laser 22 and the distance sensor 23 are installed in the heat sink 21 to form the laser assembly 2, a cylindrical part of an upper part of the contact device 24 is inserted into a central hole of the heat sink 21 and can move up and down smoothly, and the screw hole of the contact device 24 is disposed with the screw for limiting, so that the contact device 24 can move up and down within a limited range without falling off. The screw rod 4 is driven by the lifting motor 3 to rotate, so that the lifting mechanism 1 ascends and descends is realized. During operation, when focusing is needed, the lifting mechanism 1 descends, the contact device 24 contacts an engraving material, at this time, the contact device 24 does not descend any more, and the laser assembly 2 continues to descend until the contact device is detected by the distance sensor 23. At this situation, a reference height of the laser assembly 2 can be determined, and then the lifting mechanism 1 ascends again, and the contact device 24 returns to a detection range of the distance sensor 23 again due to the gravity or the thrust of the spring. The ascending distance of the lifting mechanism 1 is determined according to the laser focal length preset by the system, so that the laser focus can be accurately located on the surface of the material by performing the above steps.

The above shows and describes the basic principle, main features and advantages of the disclosure. Those skilled in the related art should understand that the disclosure is not limited by the above embodiments. The above embodiments and descriptions are only the preferred embodiments of the disclosure and are not used to limit the disclosure. On the premise of not departing from the spirit and scope of the disclosure, the disclosure may have various variations and changes, which fall within the scope of the disclosure to be protected. The scope of protection claimed by the disclosure is defined by the appended claims and their equivalents.

## Claims

1. A laser automatic focusing equipment for a laser engraving machine, comprising:
a lifting mechanism (1), a laser assembly (2) and a lifting motor (3);
wherein the lifting motor (3) is fixedly disposed on an upper end of a side of the lifting mechanism (1), the lifting motor (3) is in transmission connection with the lifting mechanism (1), and the laser assembly (2) is disposed at a lower end of the side of the lifting mechanism (1); and
wherein the laser assembly (2) comprises a heat sink (21), a laser (22), a distance sensor (23), and a contact device (24); the laser (22) is disposed in the heat sink (21), the contact device (24) is disposed in the heat sink (21) and at a bottom end of the laser (22), and the distance sensor (23) is disposed in the heat sink (21) and on a side of the laser (22).

2. The laser automatic focusing equipment according to claim 1, wherein the lifting mechanism (1) comprises an upper fixing plate (11), a side plate (12), a lower fixing plate (13), and a lifting seat (14);
wherein the side plate (12) is fixedly disposed at a bottom end of the upper fixing plate (11), and the lower fixing plate (13) is fixedly disposed at a bottom end of the side plate (12), a screw rod (4) is movably disposed between the upper fixing plate (11) and the lower fixing plate (13) through a bearing, the lifting seat (14) is sleeved on an outer side of the screw rod (4), the bottom end of the upper fixing plate (11) is fixedly disposed with limit rods (5) on two sides of the screw rod (4) respectively, and a bottom end of each of the limit rods (5) passes through the lifting seat (14) and is fixedly connected to the lower fixing plate (13).

3. The laser automatic focusing equipment according to claim 2, wherein a top end of the screw rod (4) passing through the upper fixing plate (11) is fixedly disposed with a first synchronous pulley (6) located on a top of the upper fixing plate (11), an output end of the lifting motor (3) passing through the upper fixing plate (11) is fixedly disposed with a second synchronous pulley (7) located on the top of the upper fixing plate (11), and the first synchronous pulley (6) and the second synchronous pulley (7) are in transmission connection through a belt.

4. The laser automatic focusing equipment according to claim 2, wherein a side of the lifting seat (14) is fixedly disposed with a fixing back plate (8).

5. The laser automatic focusing equipment according to claim 1, wherein a bottom end of the contact device (24) is formed with a screw hole.

6. The laser automatic focusing equipment according to claim 1, wherein a surface of the heat sink (21) is formed with a plurality of heat-dissipation grooves.
